# FASCICULE DE BREVET EUROPEEN

(11) **EP 2 739 490 B1**
(45) Date de publication et mention de la délivrance du brevet: **28.10.2015**
(21) Numéro de dépôt: 12758520.6
(22) Date de dépôt: 25.07.2012
(51) Int. Cl.: B60C 23/00

(54) **DISPOSITIF D'ÉTANCHÉITÉ TOURNANT ET BAGUE D'ÉTANCHÉITÉ POUR UN TEL DISPOSITIF**
ROTATIONSVORRICHTUNG UND DICHTRING FÜR EINE SOLCHE VORRICHTUNG
ROTARY SEALING DEVICE, AND SEALING RING FOR SUCH A DEVICE

(30) Priorité: 02.08.2011 FR 1102417
(43) Date de publication de la demande: 11.06.2014
(73) Titulaire: NEXTER Mechanics, 78000 Versailles (FR)
(72) Inventeur: TAJAN, Emmanuel, F-19012 Tulle Cedex (FR)
(74) Mandataire: Célanie, Christian
(86) Numéro de dépôt international: PCT/FR2012/000309
(87) Numéro de publication internationale: WO 2013/017745

(56) Documents cités:
- EP-A1- 1 095 799
- EP-A2- 2 308 698
- WO-A1-00/15451
- US-A- 5 868 881
- US-A1- 2004 150 168

## Description

Le domaine technique de l'invention est celui des dispositifs d'étanchéité tournants associés à un passage de fluide, et en particulier des dispositifs mis en oeuvre pour les systèmes de gonflage de roues de véhicules.

Il est connu de réaliser des systèmes de gestion du gonflage et du dégonflage des pneumatiques. Ces systèmes permettent d'ajuster à volonté la pression à l'intérieur des pneumatiques lors du roulage du véhicule.

Le brevet FR-2731655 décrit un tel système de gonflage/dégonflage. Les systèmes connus doivent permettre le passage d'une pression de fluide (en l'occurrence de l'air) entre une partie fixe (le châssis du véhicule) et une partie tournante (la roue). Pour pouvoir réaliser effectivement le gonflage, il est nécessaire de pouvoir assurer l'étanchéité à la pression de l'air lors du passage de ce fluide de la partie fixe à la partie mobile.

Pour réaliser cette étanchéité il est connu, notamment du brevet FR-2731655, de mettre en oeuvre des joints tournants à lèvres élastiques. Ces joints sont cependant de structure complexe et ils sont coûteux. Par ailleurs ils sont adaptés à la réalisation d'étanchéités pour des diamètres relativement réduits (inférieurs à 100 mm).

Le brevet US-5868881 décrit une bague d'étanchéité pour un dispositif d'étanchéité tournant comportant une face frontale destinée à venir en contact avec une surface d'appui tournante et une face arrière destinée à recevoir une effort de poussée fourni par un moyen de positionnement, la bague comportant sur chacune de ses surfaces cylindriques interne et externe au moins une gore annulaire apte à recevoir un torique.

Or, il existe un besoin pour réaliser des étanchéités pour des diamètres plus importants, en particulier pour les systèmes de gonflage et dégonflage des pneumatiques d'engins lourds, tels que les camions, les machines agricoles ou les véhicules de chantier.

Les solutions connues impliquent par ailleurs un appui permanent de la lèvre d'étanchéité sur sa portée. Il en résulte une usure rapide qui impose un remplacement des joints.

L'invention a pour objet de proposer un dispositif d'étanchéité tournant, dispositif qui peut être mis en oeuvre facilement pour des diamètres importants des parties tournantes (supérieurs à 100 mm).

Le dispositif selon l'invention permet par ailleurs de limiter l'usure par frottements de la bague d'étanchéité, ce qui autorise un emploi sur de longues périodes et sans remplacement des bagues d'étanchéité.

Le dispositif selon l'invention peut bien entendu être mis en oeuvre pour des diamètres inférieurs à 100 mm, il assure dans tous les cas une étanchéité avec une réduction des frottements et de l'usure.

L'invention a également pour objet une bague d'étanchéité associée à un tel dispositif.

Ainsi, l'invention a pour objet un dispositif d'étanchéité tournant pour un passage de fluide, en particulier pour un système de gonflage de roues de véhicules, dispositif comprenant au moins un joint qui est interposé entre un support fixe et une couronne montée tournante par rapport au support, le joint étant constitué par une bague qui est montée coulissante dans une gorge du support fixe et qui comporte une face frontale destinée à venir en contact avec une surface d'appui de la couronne tournante, la bague pouvant être appliquée contre la surface d'appui par un moyen de positionnement exerçant un effort de poussée sur une face arrière de la bague, la bague comportant sur chacune de ses surfaces cylindriques internes et externe au moins une gorge annulaire destinée à recevoir un joint torique, dispositif caractérisé en ce que le moyen de positionnement est constitué par une pression de fluide qui est appliquée contre la face arrière de la bague au travers d'un orifice du support.

Selon une caractéristique de l'invention, la pression de fluide peut être appliquée au travers d'un clapet anti-retour et d'un régulateur de pression, un niveau de pression pouvant ainsi être maintenu entre le support et la face arrière de la bague.

Selon une autre caractéristique de l'invention, le dispositif comporte un orifice de fuite calibré reliant la gorge annulaire et l'extérieur.

Selon encore une autre caractéristique de l'invention, la bague comporte au moins un perçage reliant sa face arrière) et sa face frontale et permettant le passage d'une pression de fluide, au travers de la bague, entre le support fixe et la couronne tournante.

Selon encore une autre caractéristique de l'invention, la face frontale comporte un sillon médian circulaire (17) dans lequel débouche le perçage.

Selon encore une autre caractéristique de l'invention, le dispositif comporte deux bagues coaxiales, chaque bague étant montée coulissante dans une gorge du support fixe, une tubulure traversant le support et débouchant dans une chambre annulaire délimitée radialement par les bagues et communiquant avec un perçage de la couronne tournante.

L'invention a également pour objet une bague d'étanchéité destinée à être mise en oeuvre dans un tel dispositif d'étanchéité tournant.

Ainsi, la bague d'étanchéité est apte à être mise en oeuvre dans un dispositif d'étanchéité tournant, bague comportant une face frontale destinée à venir en contact avec une surface d'appui tournante et une face arrière qui est destinée à recevoir un effort de poussée fourni par un moyen de positionnement, bague comportant sur chacune de ses surfaces cylindriques interne et externe au moins une gorge annulaire destinée à recevoir un joint torique, bague comportant au moins un perçage reliant sa face arrière et sa face frontale, le perçage débouchant au niveau de la face frontale dans un sillon médian circulaire, bague ***caractérisée en ce qu***'elle comporte une partie arrière annulaire plus mince qu'une partie avant annulaire, l'aire (S₂) de la face arrière étant égale à celle (S₁) du fond du sillon médian (17) porté par la face frontale.

Avantageusement la bague est réalisée en un matériau organique à faible coefficient de friction, tel que le polytétrafluoréthylène, matériau qui est chargé de graphite.

Egalement encore, la bague d'étanchéité est apte à être mise en oeuvre dans un dispositif d'étanchéité tournant, la bague comportant une face frontale destinée à venir en contact avec une surface d'appui tournante et une face arrière qui est destinée à recevoir un effort de poussée fourni par un moyen de positionnement, bague comportant sur chacune de ses surfaces cylindriques interne et externe au moins une gorge annulaire destinée à recevoir un joint torique, bague caractérisée en ce qu'elle est comporte un corps métallique sur lequel est fixé un grain en un matériau organique à faible coefficient de friction.

L'invention sera mieux comprise à la lecture de la description qui va suivre de modes particuliers de réalisation, description faite en référence aux dessins annexés et dans lesquels :
- la figure 1 est un schéma général d'implantation d'un dispositif d'étanchéité selon l'invention dans un système de gonflage des roues d'un véhicule,
- la figure 2a est une vue en coupe partielle d'un premier mode de réalisation d'un dispositif d'étanchéité tournant selon l'invention,
- la figure 2b est une vue partielle agrandie de ce premier mode de réalisation,
- la figure 2c est une vue frontale de la bague d'étanchéité seule (vue côté face frontale),
- la figure 3a est une vue en coupe partielle d'un deuxième mode de réalisation d'un dispositif d'étanchéité tournant selon l'invention,
- la figure 3b est une vue partielle agrandie de ce deuxième mode de réalisation,
- la figure 4 est une vue partielle agrandie d'une variante de réalisation de ce deuxième mode,
- la figure 5 est une vue partielle agrandie d'un troisième mode de réalisation,
- la figure 6 est une vue partielle agrandie d'une variante de ce troisième mode de réalisation,
- la figure 7 est une vue partielle agrandie d'un quatrième mode de réalisation dé l'invention, et
- les figures 8a et 8b montrent un autre mode de réalisation d'une bague selon l'invention, la figure 8a étant une coupe partielle suivant les plans brisés dont la trace AA est visible à la figure 8b, et la figure 8b étant une vue de cette bague du côté de sa face arrière (vue suivant la flèche F de la figure 8a).

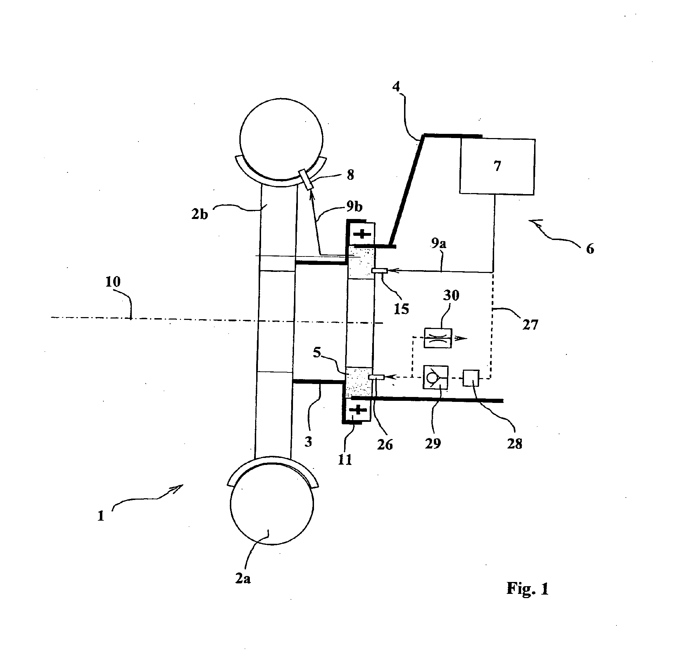

La figure 1 montre de façon schématique une roue 1 d'un véhicule (non représenté) qui comprend un pneumatique 2a qui est fixé sur une jante 2b. Une couronne 3 est solidaire de la jante 2 et elle permet la fixation de cette dernière sur un support fixe 4, par exemple un châssis du véhicule.

La liaison entre la couronne 3 tournante et le support 4 fixe est réalisée par une liaison pivot qui comporte au moins un roulement 11 et qui comporte un dispositif d'étanchéité tournant 5. Cette liaison permet le pivotement mécanique de la couronne 3 par rapport au support 4.

Le véhicule est équipé d'un système de gonflage de roues 6 qui comprend une unité de commande de gonflage / dégonflage 7 qui ne fait pas l'objet de la présente invention et n'est donc pas décrite en détails. Cette unité comportera de façon classique un compresseur, un système pneumatique de pilotage des pressions pour le gonflage et le dégonflage pouvant éventuellement inclure une pompe à vide pour le dégonflage ainsi que des moyens électroniques de commande. Le système de gonflage / dégonflage 6 comprend aussi une valve 8 commandée qui est solidaire du pneumatique 2a, et des tubulures 9a et 9b de conduite de l'air comprimé.

Une première tubulure 9a conduit l'air de l'unité de commande de gonflage 7 jusqu'au dispositif d'étanchéité tournant 5, une deuxième tubulure 9b conduit l'air comprimé du dispositif d'étanchéité 5 jusqu'à la valve de gonflage/dégonflage 8.

Le dispositif d'étanchéité 5 permet donc le passage de l'air comprimé destiné au gonflage, de l'unité 7 jusqu'au pneumatique 2a, sans fuites, malgré le pivotement relatif de la roue 1 par rapport au support fixe (ou châssis) 4 autour de l'axe 10.

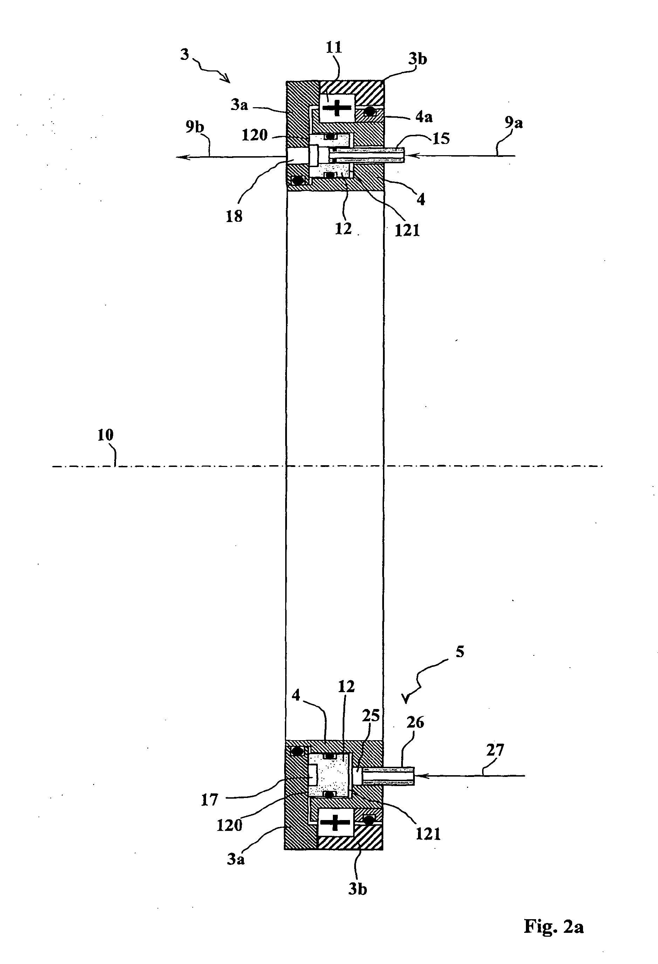

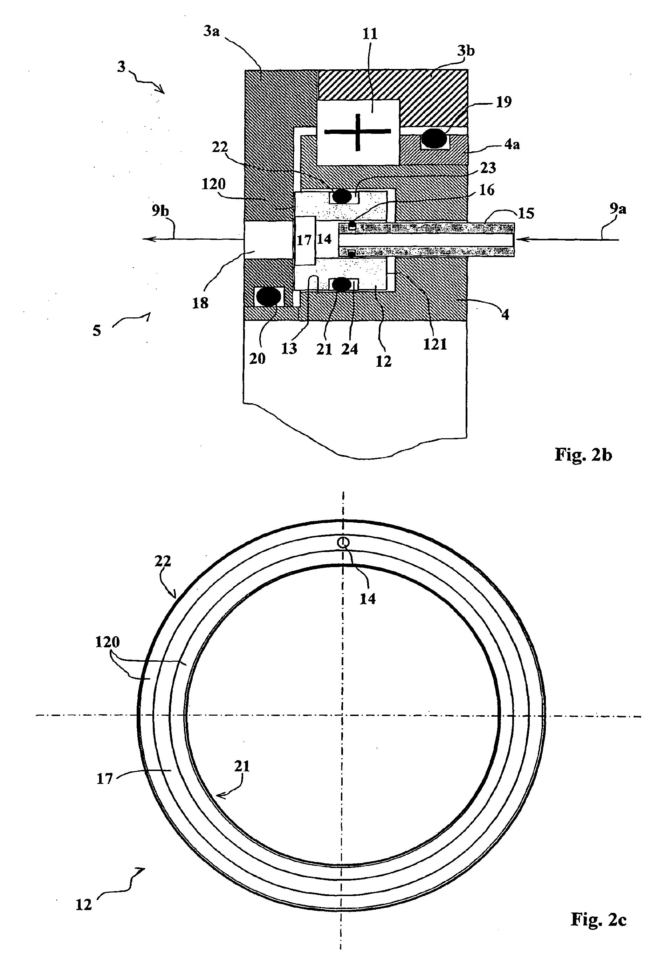

Les figures 2a et 2b montrent un premier mode de réalisation du dispositif d'étanchéité tournant 5.

La couronne 3 pivotante est réalisée ici sous la forme de l'assemblage de deux cages annulaires 3a et 3b qui sont rendues solidaires l'une de l'autre par des vis. (non représentées). Le montage de ces cages 3a et 3b permet d'emprisonner la bague extérieure d'un roulement 11.

Le support fixe 4, qui est rendu par ailleurs solidaire du châssis du véhicule, est lui-même solidaire de la bague intérieure du roulement 11.

La solidarisation du roulement 11 et du support 4 est assurée par le montage d'un écrou arrière 4a sur le support.

Grâce au roulement 11, la couronne 3 pivote par rapport au support 4.

Conformément à l'invention, un joint 12, qui est réalisé sous la forme d'une bague, est interposé entre le support fixe 4 et la couronne tournante 3.

Cette bague 12 est montée coulissante suivant l'axe 10 de rotation dans une gorge circulaire 13 du support fixe 4.

La bague 12 est délimitée par deux surfaces cylindriques coaxiales, elle a une section rectangulaire ou carrée et comporte une face frontale 120 qui est destinée à venir en contact avec une surface d'appui de la couronne tournante 3.

La bague 12 est appliquée contre la surface d'appui par un moyen de positionnement qui exerce un effort de poussée sur une face arrière 121 de la bague 12. Cet effort de poussée est exercé suivant la direction de l'axe de pivotement 10. Il fait coulisser la bague 12 dans sa gorge 13 et applique la face frontale 120 de la bague 12 contre la surface d'appui de la couronne tournante 3.

La bague 12 est réalisée de préférence en un matériau organique à faible coefficient de friction, tel que le polytétrafluoréthylène (ou PTFE plus connu sous la marque déposée Téflon), matériau qui est chargé de graphite. Un tel matériau composite présente un coefficient de frottement très réduit et de bonnes qualités de déformabilité qui le rendent particulièrement bien adapté à la réalisation de joints d'étanchéité. La surface d'appui de la couronne 3 qui est destinée à recevoir l'appui de la bague 12 aura un usinage adapté au niveau d'étanchéité recherché. On notera que la rugosité de la surface d'appui dépendra du diamètre de la bague 12. Une bague 12 de diamètre réduit nécessitera une surface à rugosité faible (rectifiée et polie). Une bague 12 de diamètre plus fort nécessitera une rugosité plus forte notamment pour réduire les efforts de frottement. Avantageusement, a bague d'étanchéité pourra comporter un corps métallique sur lequel sera fixé un grain en un matériau organique à faible coefficient de friction tel le polytétrafluoréthylène.

Pour réaliser cette surface d'appui, on pourra alternativement fixer à la couronne 3 un grain d'un matériau résistant bien au frottement, tel du silicium.

La bague 12 comporte par ailleurs un perçage 14 (voir figure 2b) qui relie sa face arrière 121 et sa face frontale 120. Ce perçage 14 permet le passage d'une pression de fluide, au travers de la bague 12, entre le support fixe 4 et la couronne tournante 3.

On voit sur la figure 2a que la tubulure 9a est raccordée à une canule 15 qui est solidaire du support 4. La canule 15 est montée coulissante dans le perçage 14 de la bague 12 et une étanchéité par au moins un joint torique 16 est assurée entre la canule 15 et la bague 12. Ainsi le déplacement de la bague 12 par l'action du moyen de positionnement n'est pas gêné par la canule 15.

Comme on le voit sur les figures, et plus particulièrement sur la figure 2c, la face frontale 120 de la bague 12 comporte un sillon médian 17 circulaire dans lequel débouche lé perçage 14. Ainsi la pression de gaz qui est conduite par la canule 15 au travers de la bague 12 s'établit dans tout le sillon 17 qui forme une chambre dont l'étanchéité est assurée par l'appui de la bague 12 contre la couronne tournante 3.

On remarque sur les figures 2a et 2b que la couronne tournante 3 porte un perçage 18 qui communique avec le sillon 17. Ce perçage 18 reçoit par ailleurs la tubulure 9b qui conduit la pression de gaz vers le pneumatique 2a. Le perçage 18 est positionné radialement en regard du sillon 17. Donc, quelle que soit la position angulaire de la couronne 3 par rapport au support 4, la pression de gaz provenant de la canule 15 est conduite au perçage 18 via le sillon 17.

On remarque sur les figures que l'étanchéité est complétée par différents joints:
- un premier joint pare-boue arrière 19 disposé entre l'écrou 4a du support 4 et la coquille 3b,
- un second joint pare-boue 20 entre la coquille avant 3a et le support 4.

Par ailleurs l'étanchéité du coulissement de la bague 12 dans sa gorge 13 est assurée par des joints toriques 21 et 22 d'axe 10. Ces deux joints 21 et 22 permettent aussi de bloquer la bague 12 en rotation dans sa gorge 13.

Un joint externe 22 est disposé dans une gorge annulaire 23 d'axe 10 réalisée sur la surface cylindrique externe de la bague 12. Un joint interne 21 est disposé dans une gorge annulaire 24 d'axe 10 réalisée sur la surface cylindrique interne de la bague 12.

Suivant ce premier mode de réalisation de l'invention, le moyen de positionnement est constitué par une pression de fluide qui est appliquée contre la face arrière 121 de la bague 12.

Cette pression est appliquée au travers d'un orifice 25 du support 4 (figure 2a). L'orifice 25 débouche dans la gorge annulaire 13 qui reçoit la bague 12. Comme on le voit sur la figure 2a une autre canule 26 est logée dans l'orifice 25.

Comme représenté à la figure 1, la canule 26 reçoit une tubulure 27 qui est raccordée à l'unité de gonflage 7 au travers d'un régulateur de pression 28 et d'un clapet anti-retour 29.

Ainsi, lors du gonflage du pneumatique 2a, un niveau de pression, qui est calibré par le régulateur 28 à une valeur appropriée, est appliqué à la face arrière 121 de la bague 12. Le niveau de pression dépendra en particulier du diamètre de la bague 12.

Cette pression calibrée permet de limiter la force d'appui de la bague 12 contre la couronne 3, donc de limiter aussi le couple résistant, les frottements et l'échauffement de la bague 12.

Le clapet anti-retour 29 permet de maintenir ce niveau de pression d'une façon pratiquement permanente (aux fuites près) entre le support 4 et la face arrière 121 de la bague 12. Les pertes de pression sont compensées à chaque nouveau gonflage du pneumatique 2a.

A titre de variante, il est possible de définir un dispositif selon l'invention dans lequel les fuites de pression entre le support 4 et la face arrière 121 de la bague sont calibrées de façon à assurer une baisse rapide de la pression après gonflage. On pourra pour cela ajouter un orifice calibré 30 entre la gorge annulaire 13 et l'extérieur, par exemple placé en parallèle avec le clapet anti-retour 29 (voir figure 1).

L'avantage de cette variante est que l'effort de frottement de la bague 12 contre la couronne 3 diminue très vite après le gonflage ainsi que les frottements. Cette variante permet donc de réduire très fortement l'usure.

Elle présente l'inconvénient de demander davantage d'air lors du gonflage pour compenser la fuite.

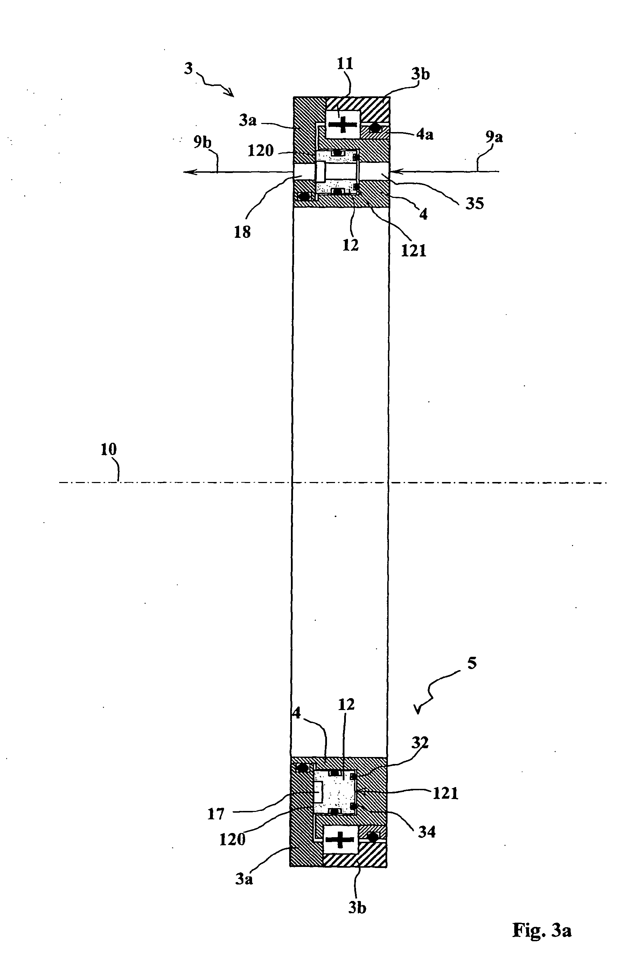

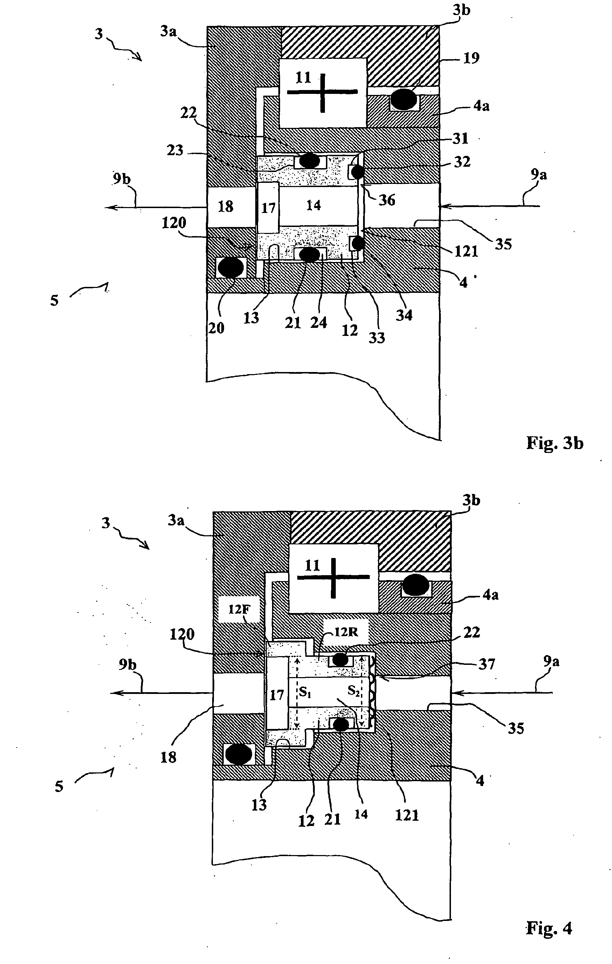

Les figures 3a et 3b montrent un deuxième mode de réalisation de l'invention qui diffère essentiellement du précédent par la structure du moyen de positionnement.

On remarque ainsi à la figure 3a que le support 4 ne comporte plus l'orifice 25 qui permettait d'appliquer une pression de gaz sur la face arrière 121 de la bague 12.

Suivant ce mode de réalisation, la face arrière 121 de la bague porte deux gorges circulaires 31 et 33 d'axe 10 qui reçoivent chacune un joint torique 32 ou 34. Les gorges 31,33 et les joints 32,34 sont dimensionnés par rapport à la gorge 13 de telle sorte que les joints 32,34 soient comprimés tandis que la face avant 120 de la bague est appliquée contre la couronne 3.

Les joints toriques 32,34 forment un moyen ressort qui est interposé entre la face arrière 121 de la bague 12 et le support 4.

On remarque aussi sur les figures 3a et 3b qu'il n'y a plus de canule 15 introduite dans l'alésage 14 de la bague 12 mais que la tubulure 9a est raccordée directement à un alésage 35 du support 4, en arrière de la bague 12. La canule n'est plus nécessaire car le moyen de positionnement 32,34 n'utilise plus ici la pression des gaz.

Lorsqu'une pression de gaz est appliquée par la tubulure 9a pour réaliser un gonflage, cette pression s'exerce d'une part au niveau d'une surface annulaire 36 de la face arrière 121 (entre les deux joints 32 et 34) et d'autre part au niveau du fond du sillon médian 17. Pour assurer l'étanchéité on dimensionnera la bague 12 de telle sorte que la surface annulaire arrière 36 ait sensiblement la même aire que le fond du sillon 17 porté par la face frontale 120. Ainsi les pressions s'équilibrent et la bague 12 est appliquée contre la couronne 3 par un effort qui résulte du seul moyen de positionnement 32,34.

Par conception il est donc possible de calibrer l'effort de frottement de la bague 12 contre la couronne 3, donc le niveau d'étanchéité assuré (ainsi que le frottement subi).

En fonction des contraintes opérationnelles (diamètre des roues, pressions de gonflages...), il est possible de définir un dispositif selon l'invention dans lequel le moyen ressort est de structure différente.

Ainsi à titre d'exemple la figure 4 montre un dispositif dans lequel ce moyen ressort est constitué par au moins une rondelle ressort métallique compressible 37 qui est interposée entre la face arrière 121 de la bague 12 et le fond de la gorge 13 du support 4.

Là encore on définira la bague 12 de telle sorte que la pression qui s'exerce au niveau de la surface annulaire de la face arrière 121 équilibre la pression qui s'exerce au niveau du fond du sillon 17. Pour cela la forme de la bague 12 et celle de sa gorge 13 sont modifiées (tout en conservant à la bague son axe de symétrie 10). La bague comporte alors une partie arrière 12R annulaire d'axe 10 ayant une épaisseur inférieure à celle d'une partie avant 12F, également annulaire et d'axe 10. La partie avant 12F porte la face frontale 120 et la partie arrière 12R porte la face arrière 121 sur laquelle appuie le moyen ressort 37. La surface arrière S₂ (surface de la face arrière 121) a une aire égale à celle de la surface S₁ du fond du sillon médian 17.

Là encore des joints toriques 21 et 22 permettent à la fois d'assurer une étanchéité entre la bague 12 et la gorge 13 et aussi de bloquer la bague 12 en rotation dans sa gorge 13.

Ces joints 21 et 22 sont portés par la partie arrière 12R de la bague 12.

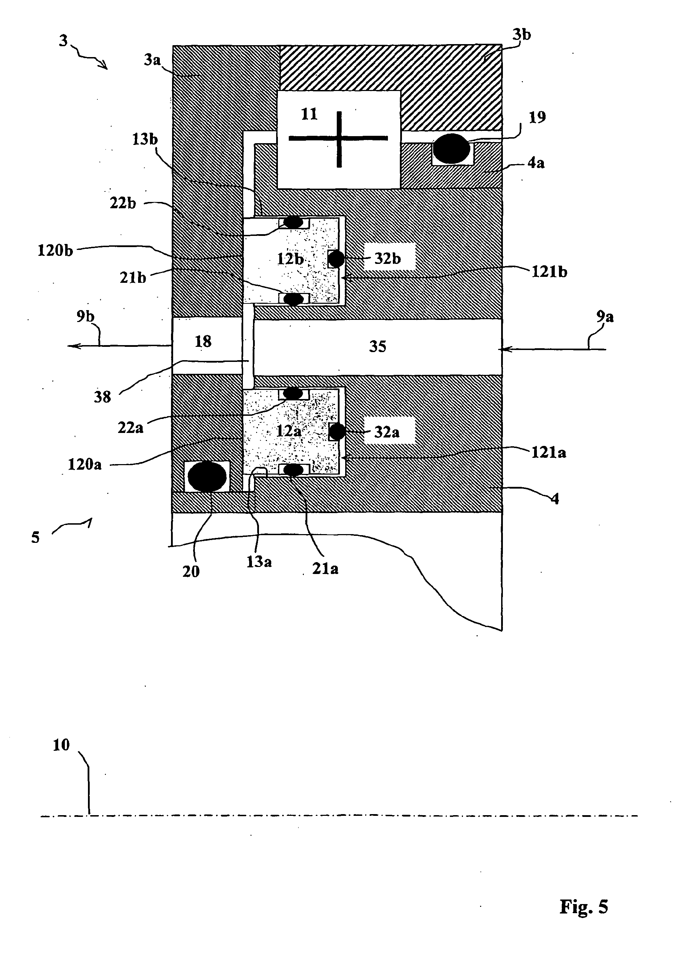

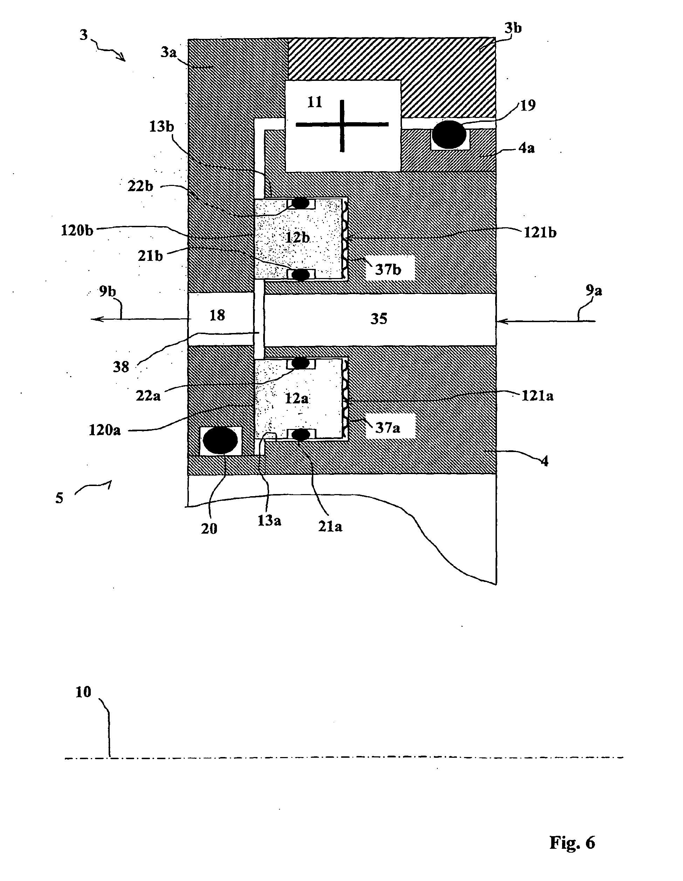

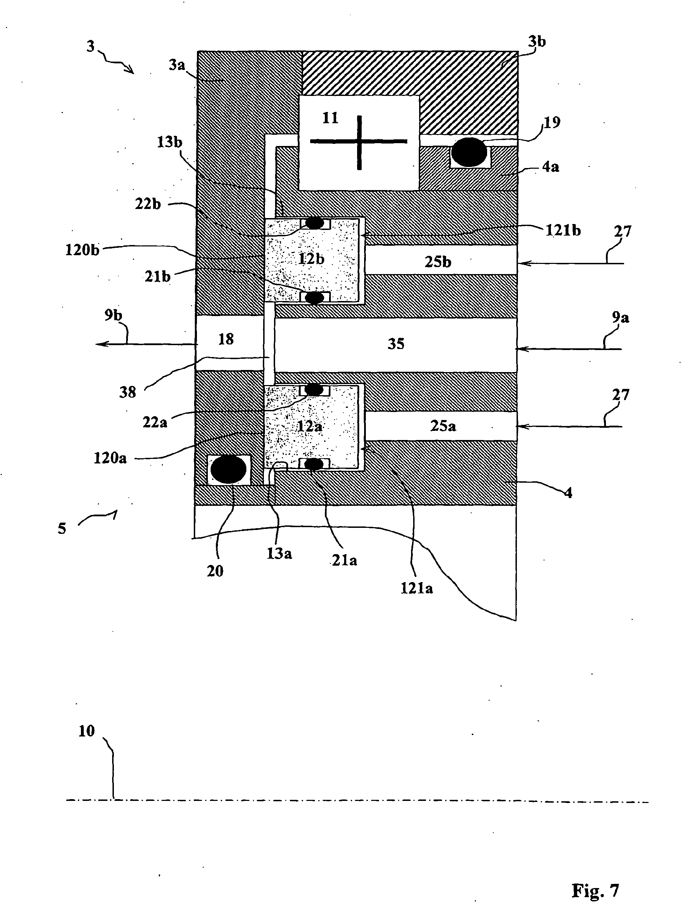

La figure 5 montre de façon partielle un autre mode de réalisation de l'invention dans lequel le dispositif d'étanchéité met en oeuvre deux bagues 12a et 12b, coaxiales et ayant chacune pour axe de symétrie l'axe 10 de rotation de la roue. Pour la simplification du tracé la vue se limite ici (ainsi que pour les figures 6 et 7) à une demi vue en coupe. On a cependant fait figurer l'axe 10 pour rappeler la symétrie de toutes les pièces annulaires.

Chaque bague 12a ou 12b comporte sur chacune de ses surfaces cylindriques interne et externe une gorge annulaire d'axe 10 recevant un joint torique. Ces joints permettent de bloquer la bague en rotation dans sa gorge 13a ou 13b.

La bague 12a porte ainsi un joint torique 21a sur sa surface cylindrique interne et un joint torique 22a sur sa surface cylindrique externe.

La bague 12b porte un joint torique 21b sur sa surface cylindrique interne et un joint torique 22b sur sa surface cylindrique externe. Tous les joints toriques on pour axe l'axe 10.

Chaque bague 12a, 12b est réalisée en un matériau organique à faible coefficient de friction, tel que le polytétrafluoréthylène, matériau qui est chargé de graphite.

Chaque bague 12a, 12b peut se translater dans sa gorge 13a ou 13b parallèlement à l'axe de symétrie 10 (qui est l'axe de la roue). Elle est appliquée contre la surface d'appui de la couronne 3 par un moyen de positionnement qui exerce un effort de poussée sur une face arrière 121a ou 121b de la bague 12a ou 12b.

Suivant le mode de réalisation qui est représenté à la figure 5, ce moyen de positionnement est constitué pour chaque bague par un joint torique unique 32a ou 32b (d'axe 10) qui se loge dans une gorge aménagée au niveau de la face arrière 121a ou 121b de chaque bague. La bague 12a porte ainsi le joint 32a et la bague 12b le joint 32b.

Un seul joint est nécessaire sur chaque bague puisqu'il n'y a plus ici de pression de gaz qui s'exerce au niveau des faces arrières 121a et 121b des bagues.

Ces joints jouent le rôle de moyens ressorts qui assurent l'application de chaque bague 12a ou 12b contre la couronne 3 avec un effort calibré.

Avec ce mode de réalisation de l'invention, les bagues 12a et 12b ne portent pas de perçage pour le passage du fluide de gonflage.

La tubulure 9a d'amenée de l'air est raccordée à l'alésage 35 qui traverse le support 4 et débouche dans une chambre 38 annulaire qui est délimitée radialement par les bagues 12a et 12b.

Le perçage 18 de la couronne tournante 3 communique avec la chambre annulaire 38. Le perçage 18 reçoit par ailleurs la tubulure 9b qui conduit la pression de gaz vers le pneumatique 2a. Le perçage 18 est positionné radialement en regard de la chambre annulaire 38. Donc, quelle que soit la position angulaire de la couronne 3 par rapport au support 4, la pression de gaz provenant de la tubulure 9a est conduite au perçage 18 via la chambre annulaire 38.

Ce mode de réalisation de l'invention permet d'assurer une pression d'appui des bagues 12a, 12b qui est indépendante de la pression ou de la dépression d'utilisation. Il est cependant moins compact que les modes précédemment décrits.

La figure 6 montre une variante de ce mode de réalisation à deux bagues 12a, 12b, variante dans laquelle le moyen ressort assurant le positionnement de chaque bague 12a, 12b est constitué par une rondelle ressort métallique compressible 37a ou 37b (d'axe 10) qui est interposée entre la face arrière 121a ou 121b de chaque bague et le fond de sa gorge 13a ou 13b du support 4.

La figure 7 montre un autre mode de réalisation à deux bagues 12a, 12b dans lequel le moyen de positionnement de chaque bague 12a, 12b est constitué par une pression de fluide qui est appliquée contre la face arrière de chaque bague au travers d'un orifice 25a ou 25b du support 4. Les orifices 25a et 25b sont raccordés en parallèle à la même tubulure 27 qui est elle-même raccordée à l'unité de gonflage 7 au travers d'un régulateur de pression 28 et d'un clapet anti-retour 29.

Le mode de fonctionnement est analogue à celui qui a été décrit précédemment en référence aux figures 2a et 2b : lors du gonflage du pneumatique 2a, un niveau de pression calibré par le régulateur 28 est appliqué à la face arrière de chaque bague 12a et 12b.

Le clapet anti-retour 29 permet de maintenir ce niveau de pression d'une façon pratiquement permanente (aux fuites près) entre le support 4 et les faces arrières de chaque bague 12a, 12b. Les pertes de pression sont compensées à chaque nouveau gonflage du pneumatique 2a.

Là encore on pourra ajouter un orifice calibré 30 (voir figure 1) entre les gorges annulaires 13a, 13b et l'extérieur, par exemple placé en parallèle avec le clapet anti-retour 29.

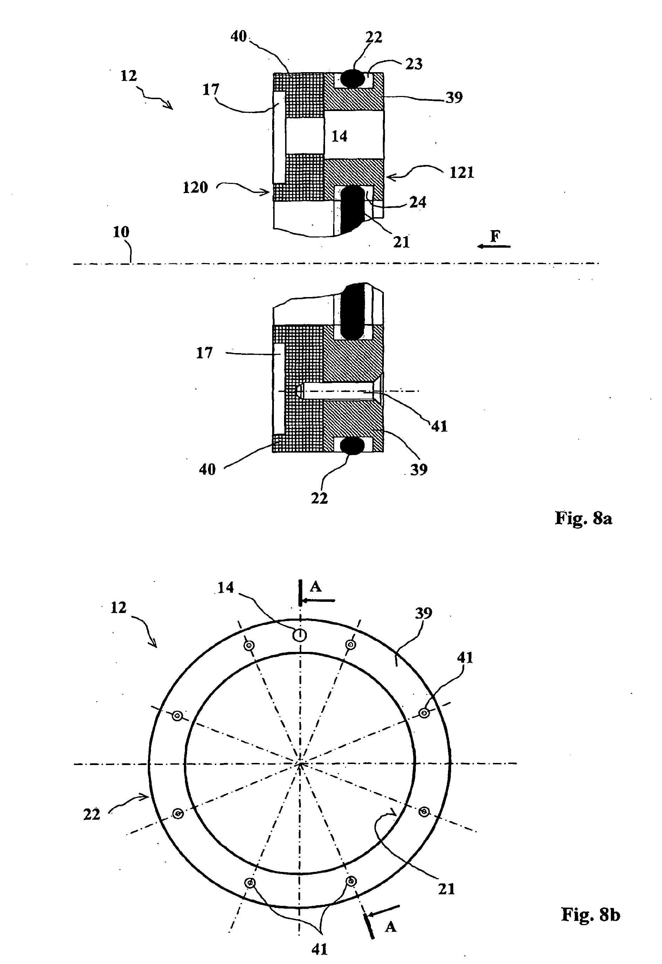

Les figures 8a et 8b montrent un autre mode de réalisation d'une bague 12 d'axe 10. Sur cette figure les deux parties coupées de la bague 12 ont été rapprochées l'une de l'autre pour réaliser une figure plus compacte.

Cette bague diffère des précédentes en ce qu'elle est réalisée en deux parties. Elle comporte ainsi un corps 39 métallique (réalisé par exemple en aluminium) sur lequel est fixé un grain 40 réalisé en un matériau organique à faible coefficient de friction, par exemple en polytétrafluoréthylène (éventuellement chargé en graphite). Le grain 40 est fixé au corps 39 par des vis 41 régulièrement réparties angulairement (il y a ici huit vis - voir la figure 8b). Comme on le voit sur les figures, le corps 39 porte les gorges annulaires 23 et 24 qui reçoivent chacune un joint d'étanchéité torique 21 ou 22. La bague 12 comporte ici un perçage 14 qui relie sa face arrière 121 et sa face frontale 120. Le perçage 14 est en partie réalisé sur le corps 39 et en partie sur le grain 40. Le perçage 14 débouche au niveau de la face frontale 120 dans un sillon médian circulaire 17 qui est porté par le grain 40.

Un tel mode de réalisation permet de dissocier les caractéristiques de frottement de la bague 12 qui sont assurées par le seul grain 40 de celles de résistance mécanique et de rigidité de la bague 12 coulissante qui sont assurées par le corps 39. Ceci est particulièrement intéressant pour les bagues d'étanchéité de diamètres importants ou à usage intensif.

Il est bien entendu possible de réaliser en deux parties les bagues décrites précédemment en référence aux figures 3a à 7 et qui sont dépourvues de perçage 14 ou qui portent des moyens ressort arrière (32,34,37) assurant leur positionnement.

On a décrit l'invention dans le cadre d'une application à un système de gonflage de pneumatiques. Il est bien entendu possible de mettre en oeuvre l'invention pour d'autres applications nécessitant un joint d'étanchéité tournant et en particulier pour des applications mettant en oeuvre d'autres fluides que l'air comprimé, par exemple : l'eau, les huiles ou les hydrocarbures. Les matériaux des joints et de la bague seront alors choisis de façon à ne pas être dégradées par le fluide.

## Revendications

1. Dispositif d'étanchéité tournant (5) pour un passage de fluide, en particulier pour un système de gonflage de roues de véhicules, dispositif comprenant au moins un joint (12) qui est interposé entre un support fixe (4) et une couronne (3) montée tournante par rapport au support (4), le joint étant constitué par une bague (12, 12a, 12b) qui est montée coulissante dans une gorge (13, 13a, 13b) du support fixe (4) et qui comporte une face frontale (120) destinée à venir en contact avec une surface d'appui de la couronne tournante (3), la bague (12, 12a, 12b) pouvant être appliquée contre la surface d'appui par un moyen de positionnement (32, 34) exerçant un effort de poussée sur une face arrière (121) de la bague, la bague (12, 12a, 12b) comportant sur chacune de ses surfaces cylindriques internes et externe au moins une gorge annulaire destinée à recevoir un joint torique (21, 22, 21a, 22a, 21b, 22b), dispositif ***caractérisé en ce que*** le moyen de positionnement est constitué par une pression de fluide qui est appliquée contre la face arrière (121) de la bague au travers d'un orifice du support (25, 25a, 25b).

2. Dispositif d'étanchéité tournant selon la revendication 1, **caractérisé en ce que** la pression de fluide peut être appliquée au travers d'un clapet anti-retour (29) et d'un régulateur de pression (28), un niveau de pression pouvant ainsi être maintenu entre le support (4) et la face arrière (121) de la bague.

3. Dispositif d'étanchéité tournant selon la revendication 2, **caractérisé en ce qu'**il comporte un orifice de fuite calibré (30) reliant la gorge annulaire (13, 13a, 13b) et l'extérieur.

4. Dispositif d'étanchéité tournant selon une des revendications 1 à 3, **caractérisé en ce que** la bague comporte au moins un perçage (14) reliant sa face arrière (121) et sa face frontale (120) et permettant le passage d'une pression de fluide, au travers de la bague (12), entre le support fixe (4) et la couronne tournante (3).

5. Dispositif d'étanchéité tournant selon là revendication 4, **caractérisé en ce que** la face frontale (120) comporte un sillon médian circulaire (17) dans lequel débouche le perçage (14).

6. Dispositif d'étanchéité tournant selon une des revendications 1 à 3, **caractérisé en ce qu'**il comporte deux bagues (12a, 12b) coaxiales, chaque bague étant montée coulissante dans une gorge (13a, 13b) du support fixe (4), une tubulure (9a) traversant le support (4) et débouchant dans une chambre annulaire (38) délimitée radialement par les bagues (12a, 12b) et communiquant avec un perçage (18) de la couronne tournante (3).

7. Bague d'étanchéité (12, 12a, 12b) destinée à être mise en oeuvre dans un dispositif d'étanchéité tournant selon une des revendications 1 à 6, bague comportant une face frontale (120) destinée à venir en contact avec une surface d'appui tournante et une face arrière (121) qui est destinée à recevoir un effort de poussée fourni par un moyen de positionnement, bague comportant sur chacune de ses surfaces cylindriques interne et externe au moins une gorge annulaire (23, 24) destinée à recevoir un joint torique (21, 22), bague comportant au moins un perçage (14) reliant sa face arrière (121) et sa face frontale (120), le perçage (14) débouchant au niveau de la face frontale (120) dans un sillon médian circulaire (17), bague ***caractérisée en ce qu***'elle comporte une partie arrière annulaire (12R) plus mince qu'une partie avant annulaire (12F), l'aire (S₂) de la face arrière (121) étant égale à celle (S₁) du fond du sillon médian (17) porté par la face frontale (120).

8. Bague d'étanchéité selon la revendication 7, **caractérisée en ce qu'**elle est réalisée en un matériau organique à faible coefficient de friction, tel que le polytétrafluoréthylène, matériau qui est chargé de graphite.

9. Bague d'étanchéité (12, 12a, 12b) destinée à être mise en oeuvre dans un dispositif d'étanchéité tournant selon une des revendications 1 à 6, bague comportant une face frontale (120) destinée à venir en contact avec une surface d'appui tournante et une face arrière (121) qui est destinée à recevoir un effort de poussée fourni par un moyen de positionnement, bague comportant sur chacune de ses surfaces cylindriques interne et externe au moins une gorge annulaire (23, 24) destinée à recevoir un joint torique (21, 22), bague **caractérisée en ce qu'**elle est comporte un corps métallique sur lequel est fixé un grain en un matériau organique à faible coefficient de friction.

## Patentansprüche

1. Sich drehende Vorrichtung zur Abdichtung (5) für eine Fluiddurchführung, insbesondere für ein System zum Auffüllen von Rädern von Fahrzeugen, wobei die Vorrichtung mindestens eine Dichtung (12) aufweist, welche zwischen einen feststehenden Träger (4) und einen in Bezug auf den Träger (4) drehbar montierten Kranz (3) eingefügt ist, wobei die Dichtung von einem Ring (12, 12a, 12b) gebildet wird, welcher gleitend in einer Nut (13, 13a, 13b) des feststehenden Trägers (4) montiert ist, und welcher eine Vorderseite (120) umfasst, welche dafür vorgesehen ist, mit einer Anschlagfläche des drehenden Kranzes (3) in Kontakt zu kommen, wobei der Ring (12, 12a, 12b) durch ein Positioniermittel (32, 34), welches eine Druckkraft auf die hintere Fläche (121) des Rings ausübt, gegen die Anschlagfläche gedrückt werden kann, wobei der Ring (12, 12a, 12b) an jeder seiner zylindrischen, inneren und äußeren Fläche mindestens eine ringförmige Nut umfasst, welche dafür vorgesehen ist, einen 0-Ring (21, 22, 21a, 22a, 21b, 22b) aufzunehmen, wobei die Vorrichtung ***dadurch gekennzeichnet ist, dass*** das Positioniermittel von einem Fluiddruck gebildet wird, welcher gegen die hintere Fläche (121) des Rings über eine Öffnung des Trägers (25, 25a, 25b) angelegt wird.

2. Sich drehende Vorrichtung zur Abdichtung nach Anspruch 1, **dadurch gekennzeichnet, dass** der Fluiddruck über ein Rückschlagventil (29) und einen Druckregler (28) angelegt werden kann, wobei dadurch ein Druckniveau zwischen dem Träger (4) und der hinteren Fläche (121) des Rings gehalten werden kann.

3. Sich drehende Vorrichtung zur Abdichtung nach Anspruch 2, **dadurch gekennzeichnet, dass** sie eine kalibrierte Lecköffnung (30) umfasst, welche die ringförmige Nut (13, 13a, 13b) mit der Außenwelt verbindet.

4. Sich drehende Vorrichtung zur Abdichtung nach einem der Ansprüche 1 bis 3, **dadurch gekennzeichnet, dass** der Ring mindestens eine Bohrung (14) umfasst, welche seine hintere Fläche (121) mit seiner vorderen Fläche (120) verbindet und den Durchlass eines Fluiddrucks durch den Ring (12) zwischen dem feststehenden Träger (4) und dem sich drehenden Kranz (3) ermöglicht.

5. Sich drehende Vorrichtung zur Abdichtung nach Anspruch 4, **dadurch gekennzeichnet, dass** die vordere Fläche (120) eine mittlere, kreisförmige Rille (17) umfasst, in welche die Bohrung (14) mündet.

6. Sich drehende Vorrichtung zur Abdichtung nach einem der Ansprüche 1 bis 3, **dadurch gekennzeichnet, dass** sie zwei koaxiale Ringe (12a, 12b) umfasst, wobei jeder Ring in einer Nut (13a, 13b) des feststehenden Trägers (4) gleitend montiert ist, wobei ein Rohr (9a) den Träger (4) durchdringt und in eine ringförmige Kammer (38) mündet, welche radial von den Ringen (12a, 12b) begrenzt wird und mit einer Bohrung (18) des sich drehenden Kranzes (3) in Verbindung steht.

7. Dichtungsring (12, 12a, 12b), welcher dafür vorgesehen ist, in einer sich drehenden Vorrichtung zur Abdichtung nach einem der Ansprüche 1 bis 6 verwendet zu werden, wobei der Ring eine vordere Fläche (120), welche dafür vorgesehen ist, mit einer sich drehenden Anschlagfläche in Kontakt zu kommen, und eine hintere Fläche (121) umfasst, welche dafür vorgesehen ist, eine von einem Positioniermittel ausgeübte Druckkraft aufzunehmen, wobei der Ring an jeder seiner zylindrischen, inneren und äußeren Fläche mindestens eine ringförmige Nut (23, 24) umfasst, welche dafür vorgesehen ist, einen O-Ring (21, 22) aufzunehmen, wobei der Ring mindestens eine Bohrung (14) umfasst, welche seine hintere Fläche (121) und seine vordere Fläche (120) verbindet, wobei die Bohrung (14) im Bereich der vorderen Fläche (120) in eine mittlere, kreisförmige Rille (17) mündet, wobei der Ring ***dadurch gekennzeichnet ist, dass*** er einen hinteren, ringförmigen Abschnitt (12R) umfasst, welcher dünner als ein vorderer, ringförmiger Abschnitt (12F) ist, wobei die Weite (S₂) der hinteren Fläche (121) gleich derjenigen (S₁) des Bodens der mittleren Rille (17) ist, welche von der vorderen Fläche (120) getragen wird.

8. Dichtungsring nach Anspruch 7, **dadurch gekennzeichnet, dass** er aus einem organischem Material mit geringem Reibungskoeffizient hergestellt ist, wie beispielsweise Polytetrafluorethylen, wobei das Material mit Graphit versetzt ist.

9. Dichtungsring (12, 12a, 12b), welcher dafür vorgesehen ist, in einer sich drehenden Vorrichtung zur Abdichtung nach einem der Ansprüche 1 bis 6 verwendet zu werden, wobei der Ring eine vordere Fläche (120), welche dafür vorgesehen ist, mit einer sich drehenden Anschlagfläche in Kontakt zu kommen, und eine hintere Fläche (121) umfasst, welche dafür vorgesehen ist, eine von einem Positioniermittel ausgeübte Druckkraft aufzunehmen, wobei der Ring an jeder seiner zylindrischen, inneren und äußeren Fläche mindestens eine ringförmige Nut (23, 24) umfasst, welche dafür vorgesehen ist, einen O-Ring (21, 22) aufzunehmen, **dadurch gekennzeichnet, dass** er einen Metallkörper umfasst, an welchem eine Körnung aus einem organischem Material mit geringem Reibungskoeffizient befestigt ist.

## Claims

1. A rotating sealing device (5) for the passage of a fluid, in particular for a system to inflate the tyres of vehicles, device comprising at least one seal (12) positioned between a fixed support (4) and a crown (3) mounted able to rotate with respect to the support (4), the seal being constituted by a ring (12, 12a, 12b) mounted able to slide in a groove (13, 13a, 13b) in the fixed support (4) and which incorporates a front face (120) intended to come into contact with a bearing surface of the rotating crown (3), the ring (12, 12a, 12b) being able to be pressed against the bearing surface by positioning means (32, 34) exerting a thrust force on a rear face (121) of the ring, the ring (12, 12a, 12b) incorporating on each of its internal and external cylindrical surfaces at least one ring-shaped groove intended to accommodate an O-ring seal (21, 22, 21a, 21b, 22a, 22b), **characterised in that** the positioning means are constituted by fluid pressure applied to the rear face (121) of the ring through an opening (25, 25a, 25b) in the support.

2. A rotating sealing device according to Claim 1, **characterised in that** the fluid pressure can be applied via a non-return valve (29) and a pressure regulator (28), a certain pressure level being thus maintained between the support (4) and the rear face (121) of the ring.

3. A rotating sealing device according to Claim 2, **characterised in that** it incorporates a calibrated leak orifice (30) connecting the ring-shaped groove (13, 13a, 13b) and the exterior.

4. A rotating sealing device according to one of Claims 1 to 3, **characterised in that** the ring incorporates at least one bore (14) linking its rear face (121) and its front face (120) and enabling the passage of a fluid pressure, through the ring (12), between the fixed support (4) and the rotating crown (3).

5. A rotating sealing device according to Claim 4, **characterised in that** the front face (120) incorporates a circular median channel (17) into which the bore (14) opens out.

6. A rotating sealing device according to one of Claims 1 or 3, **characterised in that** it comprises two coaxial rings (12a, 12b), each ring being mounted sliding in a groove (13a, 13b) in the fixed support (4), a manifold (9a) passing through the support (4) and opening out into a ring-shaped chamber (38) that is radially delimited by the rings (12a, 12b) and in communication with a bore (18) of the rotating crown (3).

7. A sealing ring (12, 12a, 12b) intended to be implemented in a rotating sealing device according to one of Claims 1 to 6, such ring incorporating a front face (120) intended to come into contact with a rotating bearing surface and a rear face (121) which is intended to receive a thrust force supplied by positioning means, ring incorporating on each of its internal and external cylindrical surfaces at least one ring-shaped groove (23, 24) intended to accommodate an O-ring seal (21, 22), ring incorporating at least one bore (14) linking its rear face (121) and its front face (120), the bore (14) opening out on the front face (120) into a circular median channel (17), ring **characterised in that** it incorporates a ring-shaped rear part (12R) thinner than a ring-shaped front part (12F), the surface area (S₂) of the rear face (121) being equal to that (S₁) of the bottom of the median channel (17) in the front face (120).

8. A sealing ring according to Claim 7, **characterised in that** it is made of an organic material with a low coefficient of friction, such as polytetrafluoroethylene, a material with high graphite content.

9. A sealing ring (12, 12a, 12b) intended to be implemented in a rotating sealing device according to one of Claims 1 to 6, such ring incorporating a front face (120) intended to come into contact with a rotating bearing surface and a rear face (121) which is intended to receive a thrust force supplied by positioning means, ring incorporating on each of its internal and external cylindrical surfaces at least one ring-shaped groove (23, 24) intended to accommodate an O-ring seal (21, 22), ring **characterised in that** it comprises a metallic body onto which a bushing of an organic material with a low coefficient of friction is fixed.
